**Europäisches Patentamt**

**European Patent Office**

**Office européen des brevets**

(19)

(11) Veröffentlichungsnummer: **0 042 958**
A2

(12) # EUROPÄISCHE PATENTANMELDUNG

(21) Anmeldenummer: **81103713.4**

(22) Anmeldetag: **14.05.81**

(51) Int. Cl.³: **F 24 D 19/10**

(30) Priorität: **30.06.80 DE 3024714**

(43) Veröffentlichungstag der Anmeldung:
**06.01.82 Patentblatt 82/1**

(84) Benannte Vertragsstaaten:
**AT BE CH FR GB IT LI LU NL SE**

(71) Anmelder: **OKAL-Werk Niedersachsen Otto Kreibaum GmbH & Co. KG**

**D-3216 Salzhemmendorf 2(DE)**

(72) Erfinder: **Schmidt, Heinrich**
**Hemmendorfer Strasse 20**
**D-3216 Salzhemmendorf 2(DE)**

(72) Erfinder: **Kreibaum, Otto**
**Schützenplatzweg 7**
**D-3216 Salzhemmendorf 2(DE)**

(74) Vertreter: **European Patent Attorneys Dipl.-Phys. Dr. Gerhart Manitz Dipl.-Ing., Dipl.-Wirtsch.-Ing. Manfred Finsterwald**
**Dipl.-Ing. Werner Grämkow Dipl.-Chem. Dr. Heliane Heyn Dipl.-Phys. Hanns-Jörg Rotermund B. Sc. Phys. D.M.S. James G. Morgan**
**Robert-Koch-Strasse 1 D-8000 München 22(DE)**

(54) **Heizungsanlage mit einer Wärmepumpe.**

(57) Es wird eine Heizungsanlage beschrieben, die einen mit flüssigen oder gasförmigen Brennstoffen beheizbaren Heizkessel sowie eine Wärmepumpe umfaßt und bei der die Wärmepumpe in die zum Heizkessel führende Rücklaufleitung eingeschaltet ist. Die gesamte Heizungsanlage wird in Abhängigkeit von der Rücklauftemperatur geregelt, wobei diese Rücklauftemperatur eine die Wärmesituation im jeweiligen Haus charakterisierende Führungsgröße bildet.

EP 0 042 958 A2

Die Erfindung betrifft eine Heizungsanlage mit einem über Vor- und Rücklaufleitungen in wenigstens einen Heizkreis eingeschalteten, mit flüssigen oder gasförmigen Brennstoffen beheizbaren Heizkessel, einer mit dem Heizkreis verbundenen Wärmepumpe und einer in Abhängigkeit von zumindest einem Temperaturfühler arbeitenden Steuereinrichtung.

Der Verwendung von Wärmepumpen kommt in Anbetracht der zunehmenden Energieknappheit steigende Bedeutung zu, wobei in der Auslegung von Heizungsanlagen und insbesondere bei deren Regelung angestrebt werden muß, ein optimales Zusammenwirken von mit fossilen Brennstoffen betriebenen Heizkesseln und mit elektrischer Energie betriebenen Wärmepumpen zu gewährleisten.

Bei bekannten bivalenten Heizungsanlagen erfolgt die Regelung im allgemeinen witterungsabhängig über einen gewöhnlich an der Nordseite des jeweiligen Hauses angeordneten Temperaturfühler, der die Führungsgröße für die Regelung liefert. Nachteilig bei dieser Art der Regelung ist die sich dabei zwangsläufig ergebende Außerachtlassung des von Wind, Standort, Sonne und dergleichen abhängigen Wärmeabganges vom Haus, wodurch eine Optimierung der Heizungsregelung im Hinblick auf das angestrebte Minimum an Energiebedarf zumindest stark erschwert, wenn nicht sogar verhindert wird. Ferner ist bei den bekannten Heizungsanlagen nachteilig, daß beim Übergang vom Wärmepumpenbetrieb auf Kesselbetrieb ein Hochfahren des Kessels von niedriger Temperatur über den Taupunkt erfolgen muß, wobei bekanntlich Schwitzwasser auftritt, das zu Kesselschäden und im Laufe der Zeit auch zur Zerstörung des Kessels führen kann.

Aufgabe der vorliegenden Erfindung ist es, eine Heizungsanlage der eingangs definierten Art so auszubilden, daß ein sowohl hinsichtlich des Gesamtenergieverbrauchs als auch hinsichtlich der auftretenden Belastungen der einzelnen Komponenten optimales Zusammenwirken von Wärmepumpe und Heizkessel erreicht und mit einem Minimum an regeltechnischem Aufwand realisiert werden kann.

Diese Aufgabe wird nach der Erfindung dadurch gelöst, daß die Wärmepumpe in die zum Heizkessel führende Rücklaufleitung eingeschaltet und damit das Ausgangswasser der Wärmepumpe durch den Heizkessel geführt ist, daß der Betrieb der Wärmepumpe in Abhängigkeit von der Größe und dem zeitlichen Verhalten der Rücklauftemperatur bezüglich eines vorgebbaren Sollwertes und der Betrieb des Brenners des Heizkessels hinsichtlich seiner Zuschaltung in Abhängigkeit von einer Mindestdauer einer Unterschreitung der Soll-Rücklauftemperatur und hinsichtlich seiner Abschaltung in Abhängigkeit von einer vorgebbaren Brenndauer gesteuert ist, und daß zumindest bei betriebsbereiter Wärmepumpe jeder Zuschaltung des Brenners eine Wärmepumpen-Betriebsphase vorgebbarer Dauer vorgeschaltet ist.

Aufgrund der ständigen Beaufschlagung des Heizungskessels mit dem Ausgangswasser der Wärmepumpe wird der mit Öl oder Gas betriebene Heizungskessel stets auf Betriebstemperatur von etwa 50 bis 55$^O$C gehalten, so daß bei einer eventuell notwendig werdenden Inbetriebnahme des Heizungskessels kein Schwitzwasser auftreten kann. Neben dieser speziellen Anordnung der Wärmepumpe in der Rücklaufleitung ist aber von ganz entscheidender Bedeutung, daß die Heizungsanlage nach der Erfindung nicht in Abhängigkeit von einem Außentemperaturfühler, sondern vielmehr in Abhängigkeit von der Rücklauftemperatur geregelt wird, die somit praktisch als eine Art Führungsgröße ausgenutzt wird und sich dazu deshalb besonders gut eignet, weil sie die Wärmesituation im Haus wiederspiegelt, auf die sich bekanntlich nicht nur die Außentemperatur, sondern auch der jeweilige Wärmeabgang vom Haus auswirkt, der nicht mit einem Außentemperaturfühler erfaßbar ist.

Durch die spezielle Steuerung bzw. Regelung des Wärmepumpen- und Heizkesselbetriebs kann sichergestellt werden, daß die benötigte Heizenergie solange wie möglich durch die Wärmepumpe bereitgestellt wird und erst dann eine Zuschaltung des Brenners erfolgt, wenn nach Unterschreiten der Soll-Rücklauftemperatur die Wärmepumpe während einer vorgebbaren Zeitspanne, die beispielsweise drei bis fünf Minuten betragen kann, nicht in der Lage ist, ein Ansteigen der Rücklauftemperatur über den Sollwert zu bewirken. Die Inbetriebnahme des Heizkessels führt aufgrund der stets über dem Taupunkt liegenden Temperatur des Kesselwassers zu keinen Schwitzwasserproblemen und gewährleistet ein umgehendes Anheben der Rücklauftemperatur über den Sollwert. Die allein brenndauerabhängig erfolgende Abschaltung des Heizkesselbrenners erbringt neben einer hohen Regelstabilität auch den Vorteil, daß die benötigten Steuer- und Regeleinrichtungen einfach sind, wodurch auch die Umrüstung bereits bestehender Anlagen erleichtert wird.

Die jeder Brennerzuschaltung vorgeschaltete Wärmepumpen-Betriebsphase ist zumindest im wesentlichen und im allgemeinen unmittelbar gleich der eine Voraussetzung für die Brennerzuschaltung bildenden Mindestdauer der Solltemperaturunterschreitung.

Das Abschalten der Wärmepumpe kann in Abhängigkeit von der Ausgangstemperatur und/oder bei Erreichen der maximalen Arbeitstemperatur über einen Druckschalter erfolgen. Wird jedoch die Rücklauf-Solltemperatur trotz sich in Betrieb befindender Wärmepumpe für eine vorgebbare Zeit unterschritten, so erfolgt die Abschaltung der Wärmepumpe über ein in der Speiseleitung vorgesehenes Relais, da in diesem Fall der Brenner für eine bestimmte Zeit in Betrieb genommen werden muß.

Da in der Praxis von den Energieversorgungsunternehmen während der Spitzenbedarfszeiten bereits Sperrzeiten, während der Wärmepumpen nicht laufen dürfen, eingeführt sind bzw. eingeführt werden können, wird vorzugsweise die vorgebbare, mittels einer Zeituhr gesteuerte Dauer der Inbetriebnahme des Heizungskessels zumindest gleich der Dauer einer solchen zentral festgelegten Wärmepumpen-Sperrzeit gewählt.

Die Inbetriebnahme des Brenners des Heizkessels für die vorgegebene feste Zeitspanne ist nur möglich, wenn die Mindestdauer der Unterschreitung der Soll-Rücklauftemperatur überschritten und die Wärmepumpe abgeschaltet ist. In der praktisch
ausgeführten Steuerung kann die Abschaltung der die notwendige
Temperaturerhöhung nicht mehr erbringenden Wärmepumpe unmittelbar mit der Einschaltung der Zeituhr und der Zuschaltung des
Brenners gekoppelt werden, wozu lediglich die Verwendung eines
einfachen Zeitschaltrelais erforderlich ist.

Eine besonders vorteilhafte Ausführungsform der erfindungsgemäßen
Heizungsanlage, die im Regelfall stets verwendet wird, besteht
darin, daß ein Brauchwasserspeicher parallel zum Heizkreis geschaltet ist und die vom Brauchwasserspeicher kommende Leitung
und die vom Heizkreis kommende Leitung von der Wärmepumpe an
einer Mischstelle zusammengeführt sind.

Der Brauchwasserspeicher bildet gleichzeitig einen Pufferspeicher,
der eine Spreizung des Arbeitsbereichs erbringt und unter Ausschaltung eines Flatterns der Wärmepumpe die Regelstabilität erhöht.

Obwohl die stabilisierende Wirkung eines relativ großen Brauchwasserspeichers sich besonders vorteilhaft auswirkt, kann im
Falle einer Umrüstung einer bestehenden Anlage auch ein in einem
Heizkessel vorhandener Wasserspeicher im Sinne eines Pufferspeichers genützt werden, woraus ersichtlich ist, daß sich die
Erfindung ohne Schwierigkeiten und ohne größere Umbauarbeiten
zur Nach- und Umrüstung eignet, da die Einschaltung der Wärmepumpe in die zum Heizkessel führende Rücklaufleitung problemlos
durchführbar ist, das Anbringen eines Fühlers für die Rücklauftemperatur keine Schwierigkeiten bereitet und die dann noch
erforderlichen Arbeiten im wesentlichen auf Verdrahtungs- und
Anschlußvorgänge im Zusammenhang mit der elektrischen Steuer-
und Regeleinrichtung beschränkt sind, die unmittelbar im Heizungskeller bzw. dem Aufstellraum von Wärmepumpe und Heizungskessel
durchgeführt werden können.

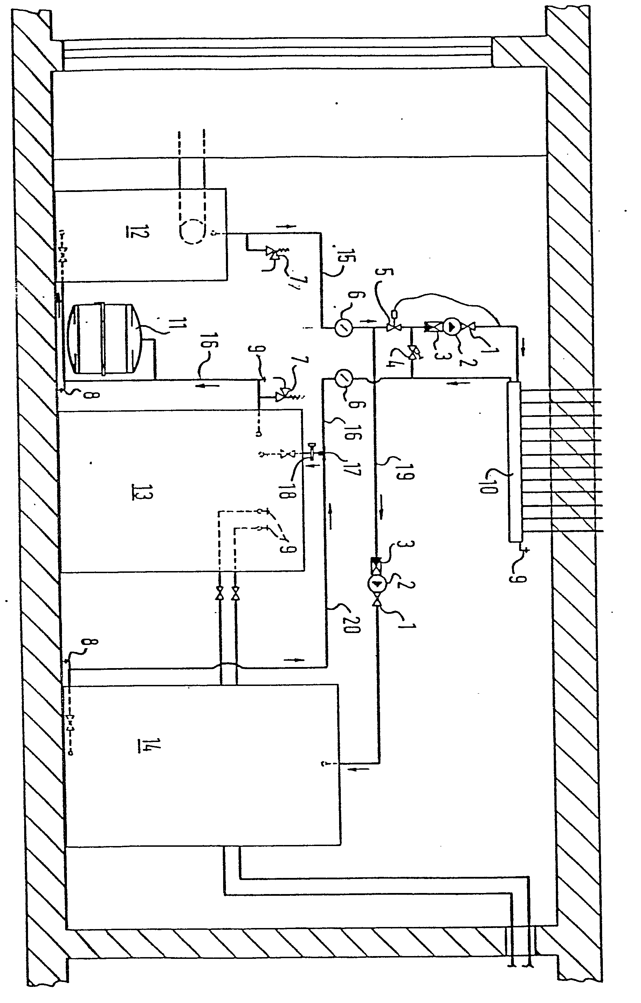

Die Erfindung wird nachfolgend anhand eines Ausführungsbeispiels unter Bezugnahme auf die Zeichnung näher erläutert. Die einzige Figur der Zeichnung zeigt eine schematische Darstellung einer Ausführungsform einer Heizungsanlage nach der Erfindung.

Nach der Zeichnung umfaßt die Heizungsanlage einen mit flüssigen oder gasförmigen Brennstoffen betreibbaren Heizkessel 12, eine Wärmepumpe 13 sowie einen beispielsweise 300 Liter fassenden Brauchwasserspeicher 14.
Mittels dieser Heizungsanlage wird eine Fußbodenheizung gespeist, deren Verteiler 10 über ein Temperaturbegrenzungsventil 5, eine Rückschlagventil 3, eine Umwälzpumpe 2 und einen Absperrschieber 1 mit der Vorlaufleitung 15 des Heizkessels 12 verbunden ist und von dem eine Rücklaufleitung 16 zur Wärmepumpe 13 führt, die in diese Rücklaufleitung 16 eingeschaltet ist und deren Ausgang mit dem Vorlaufanschluß des Heizkessels 12 verbunden ist.

Beim Verteiler 10 ist noch die Entlüftung 9 angedeutet, und außerdem ist in den geschilderten Heizkreis zwischen Vorlaufleitung 15 und Rücklaufleitung 16 ein herkömmliches STA-Ventil eingeschaltet. Um sicherzustellen, daß die Temperatur der Fußbodenheizung etwa 45°C nicht überschreitet, erfolgt die entsprechende Temperaturregelung mittels temperaturabhängig gesteuerter Einspritzvorgänge über das Temperaturbegrenzungsventil 5.

In der Vorlaufleitung 15 sowie in der Rücklaufleitung 16 sind in üblicher Weise Thermometer 6 angeordnet. Sicherheitsventile 7 befinden sich am Ausgang der Wärmepumpe 13 und am Ausgang des Heizkessels 12. Vorgesehene Entleerungen sind mit dem Bezugszeichen 8 gekennzeichnet. Die von der Wärmepumpe 13 zum Heizkessel 12 führende Leitung 16 ist mit einer üblichen Entlüftung 9 versehen, und außerdem ist an diese Leitung 16 ein Ausdehnungsgefäß 11 angeschlossen.

Der Brauchwasserspeicher 14 ist mit der vom Heizkessel 12 kommenden Vorlaufleitung 15 über eine Leitung 19, in die ein Absperrschieber, eine Umwälzpumpe und ein Rückschlagventil eingebaut sind, verbunden, und die Rücklaufleitung 20 des Brauchwasserspeichers 14 ist mit der vom Heizkreis kommenden Rücklaufleitung 16 vorzugsweise über ein T-Stück 17 zusammengeführt, so daß eine Parallelschaltung von Heizkreis und Brauchwasserspeicher gegeben ist.

Im Anschluß an die Stelle der Zusammenführung der beiden Leitungen 16, 20 ist in der mit dem Eingang der Wärmepumpe 13 verbundenen Leitung ein Temperaturfühler 18 angeordnet.

Durch die Einschaltung der Wärmepumpe 13 in die Rücklaufleitung 16 wird erreicht, daß das durch die Wärmepumpe auf beispielsweise 50 - 55$^{\circ}$C erwärmte Wasser auch bei reinem Wärmepumpenbetrieb stets durch den Heizkessel 12 geführt wird und somit den Heizkessel auf dieser über dem Taupunkt liegenden Temperatur hält. Muß der Heizkessel 12 in Betrieb genommen werden, so tritt in der bereits erwähnten Weise keine Schwitzwasserbildung auf, da das Hochheizen des Heizkesselwassers ausgehend von der durch die Wärmepumpe 13 gewährleisteten Wassertemperatur erfolgt.

Mittels des in die Rücklaufleitung 16 eingeschalteten Temperaturfühlers 18 wird die Rücklauftemperatur als eine Art Führungsgröße für die gesamte Heizanlage benutzt, und zwar dergestalt, daß nach Vorgabe einer bestimmten Rücklauftemperatur, die beispielsweise bei 45$^{\circ}$C liegen kann, die jeweils benötigte Heizleistung mittels der das Wasser um etwa 10$^{\circ}$C erwärmenden Wärmepumpe 13 erzeugt wird, die zu diesem Zweck im Rahmen einer Vorrangsteuerung stets so lange arbeitet bzw. zeitweise in Betrieb gesetzt wird, solange sie in der Lage ist, die Rücklauftemperatur über dem Sollwert zu halten. Die Überprüfung, ob die Wärmepumpe 13 die notwendige Heizleistung erbringen kann und die Rücklauftemperatur über dem Sollwert bleibt, erfolgt mittels des Fühlers 18.

Zeigt der Fühler 18 ein Unterschreiten der Sollwerttemperatur an, so wird mittels eines Zeitrelais für eine vorgebbare, beispielsweise drei bis fünf Minuten betragende Zeitspanne der
Wärmepumpe Gelegenheit gegeben, die Rücklauftemperatur wieder
über den Sollwert anzuheben. Gelingt dies der Wärmepumpe innerhalb dieser vorgegebenen Zeitspanne nicht, so schaltet das Zeitrelais die Wärmepumpe ab und den Brenner des Heizkessels 12 für
eine bestimmte Zeitspanne zu. Diese bestimmte Brennerlaufzeit
wird mittels einer Zeituhr vorgegeben.

Durch den jetzt erfolgenden Heizkesselbetrieb wird dem Heizkreislauf und gegebenenfalls dem Brauchwasserspeicher 14 genügend Energie zugeführt, um das geforderte Ansteigen der die
Führungstemperatur darstellenden Rücklauftemperatur sicherzustellen.

Der Brauchwasserspeicher 14 wirkt dabei stets als Pufferspeicher
und erbringt eine erwünschte Spreizung des Arbeitsbereichs,
die gleichbedeutend mit einer Erhöhung der Stabilität des
Regelkreises ist. Der Brauchwasserspeicher stellt demgemäß
praktisch eine Vergrößerung des Heizkreises dar.

Nach Ablauf der vorgegebenen Brennerlaufzeit erfolgt automatisch
eine Umschaltung der Heizanlage auf Wärmepumpenbetrieb, so daß
bei einem sich dann wieder einstellenden Absinken der Rücklauftemperatur unter die Solltemperatur vor einem erneuten Zuschalten
des Brenners in der bereits beschriebenen Weise wiederum versucht wird, die Rücklauftemperatur allein mittels der Wärmepumpenleistung über den Sollwert anzuheben. Nur wenn dies nicht innerhalb der vorgegebenen Zeitspanne gelingt, wird wiederum auf Kesselbetrieb umgeschaltet.

Das somit vor jeder Inbetriebnahme des Heizkessels erfolgende
Abfragen des Wärmepumpenkreises hinsichtlich seiner momentanen
Leistungsfähigkeit verringert den Einsatz des Heizkessels auf
ein absolutes Minimum,was gleichbedeutend mit einer Minimierung
des Brennstoffverbrauchs ist.

Es ist auch zu erkennen, daß die Wärmesituation in einem
mit der erfindungsgemäßen Heizanlage ausgerüsteten Haus
durch Wahl der Rücklauftemperatur zentral beeinflußt werden
kann, wobei eine Absenkung der Rücklauf-Solltemperatur gleichbedeutend mit einer Verschiebung des Betriebs in Richtung des
Wärmepumpeneinsatzes ist.

Die Heizungsanlage nach der Erfindung arbeitet auch problemfrei dann, wenn bezüglich des Wärmepumpenbetriebs zentral
vorgegebene Sperrzeiten eingeführt werden. In diesem Falle
wird die benötigte Heizleistung mittels des mit flüssigem
oder gasförmigem Brennstoff betriebenen Heizkessels 12 erbracht, dessen jeweils fest vorgegebene Betriebszeit vorzugsweise größer als die jeweils vorgegebene Sperrzeit gewählt wird.

Die über Temperaturfühler erfolgende Steuerung der Brauchwassertemperatur sowie die Steuerung der Heizungs-Umwälzpumpe erfolgt in herkömmlicher Weise. Hinsichtlich der Art
der zu verwendenden Wärmepumpe bestehen keinerlei Einschränkungen.

Eine weitere vorteilhafte Besonderheit der Erfindung besteht
darin, die normalerweise vor jeder Brennerzuschaltung erfolgende Abfragung der Wärmepumpe in Abhängigkeit von der Außentemperatur zu steuern, d.h. die Wärmepumpe vor der Brennerzuschaltung nicht in Betrieb zu setzen, wenn die Außentemperatur
so niedrig ist, daß mit Sicherheit vorhergesagt werden kann,
daß die Wärmepumpe nicht mehr in der gewünschten Weise arbeiten bzw. die geforderte Temperaturerhöhung nicht erbringen
kann. Beispielsweise könnte in diesem Zusammenhang als Grenztemperatur -8°C gewählt werden, wobei dann bei dieser und
tieferen Temperaturen die Wärmepumpe praktisch stillgelegt
wäre. Diese Maßnahme der außentemperaturabhängigen Stilllegung der Wärmepumpe wirkt sich auch vorteilhaft hinsichtlich der Lebensdauer der Wärmepumpe aus.

- 1 -

- Patentansprüche -

1. Heizungsanlage mit einem über Vor- und Rücklaufleitungen in wenigstens einen Heizkreis eingeschalteten, mit flüssigen oder gasförmigen Brennstoffen beheizbaren Heizkessel, einer mit dem Heizkreis verbundenen Wärmepumpe und einer in Abhängigkeit von zumindest einem Temperaturfühler arbeitenden Steuereinrichtung, dadurch g e k e n n z e i c h n e t , daß die Wärmepumpe (13) in die zum Heizkessel (12) führende Rücklaufleitung (16) eingeschaltet und damit das Ausgangswasser der Wärmepumpe (13) durch den Heizkessel (12) geführt ist, daß der Betrieb der Wärmepumpe (13) in Abhängigkeit von der Größe und dem zeitlichen Verhalten der Rücklauftemperatur bezüglich eines vorgebbaren Sollwertes und der Betrieb des Brenners des Heizkessels (12) hinsichtlich seiner Zuschaltung in Abhängigkeit von einer Mindestdauer einer Unterschreitung der Soll-Rücklauftemperatur und hinsichtlich seiner Abschaltung in Abhängigkeit von einer vorgebbaren Brenndauer gesteuert ist, und daß zumindest bei betriebsbereiter Wärmepumpe (13) jeder Zuschaltung des Brenners (11) eine Wärmepumpen-Betriebsphase vorgebbarer Dauer vorgeschaltet ist.

2. Heizungsanlage nach Anspruch 1, dadurch  g e k e n n z e i c h n e t , daß die jeder Brennerzuschaltung vorgeschaltete Wärmepumpen-Betriebsphase zumindest im wesentlichen gleich der eine Voraussetzung für die Brennerzuschaltung bildenden Mindestdauer der Solltemperaturunterschreitung ist.

3. Heizungsanlage nach Anspruch 1 oder 2, dadurch  g e k e n n z e i c h n e t , daß das Abschalten der Wärmepumpe (13) entweder bei Erreichen einer vorgebbaren Temperatur oder bei Erreichen ihrer maximalen Arbeitstemperatur über einen Druckschalter oder bei für eine vorgebbare Zeit unterschrittener Rücklauf-Solltemperatur über ein Relais erfolgt.

4. Heizungsanlage nach Anspruch 1, dadurch  g e k e n n z e i c h n e t , daß die vorgebbare, mittels einer Zeituhr gesteuerte Brenndauer des Heizkesselbrenners zumindest gleich der Dauer einer zentral festgelegten Wärmepumpen-Sperrzeit ist.

5. Heizungsanlage nach einem der vorhergehenden Ansprüche, dadurch  g e k e n n z e i c h n e t , daß die Dauer der jeder Brennerzuschaltung vorangehenden Wärmepumpen-Betriebsphase durch ein Zeitrelais gesteuert ist, das im Falle seiner Auslösung die Brennerzuschaltung und das Starten der Zeituhr bewirkt.

6. Heizungsanlage nach Anspruch 1, dadurch  g e k e n n z e i c h n e t , daß die Inbetriebnahme des Brenners des Heizkessels (12) in Abhängigkeit von einer Mindestdauer der Unterschreitung der Soll-Rücklauftemperatur und der erfolgten Abschaltung der Wärmepumpe (13) gesteuert ist.

7. Heizungsanlage nach einem der vorhergehenden Ansprüche, dadurch g e k e n n z e i c h n e t , daß ein Brauchwasserspeicher (14) parallel zum Heizkreis geschaltet ist und die vom Brauchwasserspeicher kommende Leitung (20) und die vom Heizkreis kommende Leitung (16) vor der Wärmepumpe (13) an einer Mischstelle (17) zusammengeführt sind.

8. Heizungsanlage nach Anspruch 7, dadurch g e k e n n - z e i c h n e t , daß der Fühler (18) zur Erfassung der Rücklauftemperatur hinter der Zusammenführung der beiden Leitungen (16, 20) angeordnet ist.

9. Heizungsanlage nach einem oder mehreren der vorhergehenden Ansprüche, dadurch g e k e n n z e i c h n e t , daß die der Brennerzuschaltung vorgeschaltete Wärmepumpen-Betriebsphase in Abhängigkeit von der Außentemperatur und direkter Brennerzuschaltung überbrückbar ist.

10. Heizungsanlage nach Anspruch 9, dadurch g e k e n n z e i c h - n e t , daß die Zuschaltung der Wärmepumpe (13) in Abhängigkeit von einem Außentemperaturfühler sperrbar ist.

0042958